(19) Europäisches Patentamt
European Patent Office
Office européen des brevets

(11) **EP 3 227 137 B1**

(12) **FASCICULE DE BREVET EUROPEEN**

(45) Date de publication et mention de la délivrance du brevet:
**08.04.2020 Bulletin 2020/15**

(21) Numéro de dépôt: **15805456.9**

(22) Date de dépôt: **04.12.2015**

(51) Int Cl.:
*H02M 3/335* (2006.01)     *H02J 7/02* (2016.01)
*H02J 7/14* (2006.01)      *H02J 1/00* (2006.01)
*H02M 1/00* (2006.01)      *B60L 58/20* (2019.01)
*H02J 7/00* (2006.01)      *H02J 7/34* (2006.01)
*H02M 3/337* (2006.01)

(86) Numéro de dépôt international:
**PCT/EP2015/078638**

(87) Numéro de publication internationale:
**WO 2016/087632 (09.06.2016 Gazette 2016/23)**

(54) **DISPOSITIF D'ALIMENTATION ET CONVERTISSEUR DE TENSION CONTINUE AMELIORE**

VERBESSERTER GLEICHSTROMWANDLER UND STROMVERSORGUNGSVORRICHTUNG

IMPROVED DIRECT-CURRENT CONVERTER AND POWER SUPPLY DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2014 FR 1461967**

(43) Date de publication de la demande:
**11.10.2017 Bulletin 2017/41**

(73) Titulaire: **Valeo Equipements Electriques Moteur 94046 Créteil Cedex (FR)**

(72) Inventeurs:
• **BAUDESSON, Philippe**
  **95892 CERGY-PONTOISE (FR)**
• **ALLALI, Nicolas**
  **93100 Montreuil (FR)**
• **CHEMIN, Michaël**
  **94510 La Queue En Brie (FR)**
• **LE MOIGNE, Philippe**
  **59651 Villeneuve d'Ascq - Cedex (FR)**
• **BARTHOLOMEUS, Patrick**
  **59651 Villeneuve d'Ascq (FR)**

(74) Mandataire: **Mozelle, Gérard Jacques**
  **Valeo Systèmes de Contrôle Moteur**
  **Département Propriété Industrielle**
  **14, avenue des Béguines**
  **BP 68532 Cedex**
  **95892 Cergy Pontoise (FR)**

(56) Documents cités:
  **EP-A2- 2 434 609        WO-A1-2014/125737**
  **US-A1- 2004 174 072    US-A1- 2008 316 774**
  **US-A1- 2013 308 347**

## Description

La présente invention concerne le domaine des dispositifs d'alimentation de réseaux électriques de véhicule automobile et un procédé de pilotage d'un tel dispositif.

Les contraintes sur les batteries des véhicules électriques sont importantes pour pouvoir concurrencer les véhicules à moteur thermique. Ainsi, les batteries doivent à la fois avoir une densité d'énergie massique élevée, c'est-à-dire contenir une grande quantité d'énergie pour une taille réduite afin de procurer une autonomie importante, et être puissantes, c'est-à-dire capables de fournir ou d'emmagasiner une grande quantité d'énergie dans un temps très court, notamment lors des phases d'accélération ou de freinage en cas d'utilisation d'un freinage régénératif.

Un moyen d'obtenir ces caractéristiques est de combiner une batterie énergétique avec une batterie de puissance.

Cependant, l'utilisation d'une telle combinaison requiert d'une part de pouvoir sélectionner la batterie sur laquelle on prélève l'énergie en fonction de la puissance demandée et d'autre part de pouvoir transférer de l'énergie entre les batteries de manière à recharger l'une à partir de l'autre.

Or, du fait des puissances mises en jeu qui sont de plusieurs dizaines de kilowatts, un convertisseur de tension continue de l'état de la technique permet de transférer une telle puissance a un coût très élevé puisqu'il nécessite des éléments magnétiques à forte capacité énergétique et/ou des moyens de commutation qui supportent la tension (d'entrée ou de sortie) ainsi que l'intégralité du courant transmis générant ainsi de fortes pertes par commutation.

Les documents US2008/316774 et WO 2014/125737 divulguent des dispositifs d'alimentation d'un réseau électrique comprenant une première batterie, une deuxième batterie et un convertisseur de tension continue configuré pour réaliser une source de courant disposée en série entre la première et la deuxième batterie et dans lequel le convertisseur de tension continue comprend un onduleur, un transformateur et un redresseur.

Le document US 2004/174072 divulgue un convertisseur de tension continue aux bornes duquel une inductance est connectée afin d'en améliorer l'efficacité.

Il convient donc de trouver une solution permettant de transférer la puissance d'une batterie à l'autre avec un rendement élevé et permettant également de sélectionner la batterie sur laquelle est prélevée la puissance pour un coût limité.

La présente invention a donc pour objet un dispositif d'alimentation d'un réseau électrique d'un véhicule automobile comprenant une première et une deuxième batterie et un convertisseur de tension continue comprenant une première borne reliée à la première batterie et une deuxième borne reliée à la deuxième batterie, la deuxième borne étant également destinée à être connectée au réseau électrique, dans lequel le convertisseur de tension continue est configuré pour réaliser une source de courant disposée en série entre la première et la deuxième batterie de façon à contrôler le courant échangé avec la première batterie.

Selon un mode de réalisation, la première batterie a une densité d'énergie massique supérieure à celle de la deuxième batterie et/ou la deuxième batterie a une densité de puissance supérieure à celle de la première batterie.

Selon un mode de réalisation, le convertisseur de tension continue comprend une inductance disposée en série avec la première et la deuxième batterie et des interrupteurs configurés pour réguler le courant dans la première inductance.

Selon un mode de réalisation, le dispositif comprend :

- un redresseur disposé en série avec l'inductance configuré pour redresser une tension alternative de façon à délivrer une tension contrôlant le courant parcourant l'inductance ;
- un onduleur configuré pour délivrer une tension alternative audit redresseur à partir d'une source de tension, dite source d'alimentation de l'onduleur ;
- un transformateur comprenant un premier enroulement primaire dont les extrémités sont reliées à la sortie de l'onduleur et un enroulement secondaire dont les extrémités sont reliées à l'entrée du redresseur.

Selon un mode de réalisation, l'onduleur est alimenté par la première batterie.

Selon un mode de réalisation, l'onduleur est alimenté par une source de tension différente des première et deuxième batteries.

Selon un mode de réalisation, le dispositif comprend un chargeur électrique configuré pour charger la source d'alimentation de l'onduleur ou la première batterie à partir d'un réseau électrique extérieur au véhicule.

Selon un mode de réalisation, l'onduleur est compris dans le chargeur, et le transformateur comprend en outre un deuxième enroulement primaire connecté à un redresseur, au moins un interrupteur étant configuré pour connecter ledit redresseur aux bornes de la source d'alimentation de l'onduleur ou à la première batterie pour charger ladite source d'alimentation de l'onduleur ou la première batterie à partir dudit chargeur.

Selon un mode de réalisation, le dispositif comprend au moins un interrupteur configuré pour connecter l'onduleur avec la source d'alimentation de l'onduleur lors d'un échange d'énergie entre la première batterie et le réseau électrique du véhicule ou la deuxième batterie, et déconnecter l'onduleur d'avec la source d'alimentation de l'onduleur lors d'une charge de ladite source d'alimentation ou de la première batterie par le chargeur.

Selon un mode de réalisation, l'onduleur et le chargeur sont deux unités différentes, et le transformateur comprend un deuxième enroulement primaire connecté audit chargeur pour alimenter la source d'alimentation de l'onduleur ou la première batterie lors de la charge de ladite source d'alimentation ou de la première batterie à partir dudit chargeur.

L'invention concerne en outre un dispositif d'alimentation d'un réseau électrique d'un véhicule automobile comprenant une première et une deuxième batterie et un convertisseur de tension continue comprenant une première borne reliée à la première batterie et une deuxième borne reliée à la deuxième batterie, la deuxième borne étant également destinée à être connectée au réseau électrique, dans lequel le convertisseur de tension continue est configuré pour réaliser une source de courant disposée en série entre la première et la deuxième batterie de façon à contrôler le courant échangé avec la première batterie ; et

dans lequel le convertisseur de tension continue comprend :

- une inductance disposée en série avec la première et la deuxième batterie ;
- un redresseur, disposé en série avec l'inductance, configuré pour redresser une tension alternative de façon à délivrer une tension contrôlant le courant parcourant l'inductance ;
- un onduleur configuré pour délivrer une tension alternative audit redresseur à partir d'une source de tension, dite source d'alimentation de l'onduleur ;
- un transformateur comprenant un premier enroulement primaire dont les extrémités sont reliées à la sortie de l'onduleur et un enroulement secondaire dont les extrémités sont reliées à l'entrée du redresseur.

Le dispositif selon cette invention peut comprendre l'une quelconque des caractéristiques décrites précédemment en relation avec le premier dispositif selon l'invention.

En outre, selon un mode de réalisation, les bornes positives respectives de la première batterie et de la deuxième batterie sont liées entre elles uniquement par l'intermédiaire de ladite inductance et dudit redresseur. Autrement dit, seuls l'inductance et le redresseur sont disposés entre les deux bornes de la première et de la deuxième batteries. En particulier, il n'est pas nécessaire d'avoir d'autres composants tels qu'une capacité flottante par rapport à la masse du dispositif d'alimentation, pour contrôler le courant échangé avec la première batterie.

Selon un mode de réalisation, une première borne de l'inductance est connectée à une borne de la première batterie, ou respectivement de la deuxième batterie, une deuxième borne de l'inductance est connectée à une première borne du redresseur ; et une deuxième borne du redresseur est connectée à une borne de la deuxième batterie, ou respectivement la première batterie. En particulier, la première borne de l'inductance est connectée à la borne positive de la première ou de la deuxième batterie ; et la deuxième borne du redresseur est connectée à la borne positive de la deuxième ou de la première batteries.

Selon un mode de réalisation, l'alimentation de l'onduleur délivre son alimentation directement aux bornes de l'onduleur. En particulier, la borne positive de l'alimentation de l'onduleur est connectée à une borne positive de l'onduleur et la borne négative de l'onduleur est connectée à une borne négative de l'onduleur.

Selon un mode de réalisation, la première et la deuxième batteries sont reliées à une même masse. En particulier, la première et la deuxième batteries sont reliées à la masse du dispositif d'alimentation.

L'invention concerne aussi un véhicule automobile comprenant un réseau électrique embarqué et un dispositif d'alimentation du réseau électrique selon l'invention.

L'invention concerne également un procédé de pilotage d'un dispositif d'alimentation selon l'invention, dans lequel la différence de tension entre les première et deuxième batteries est maintenue inférieure ou égale à un seuil.

Selon un mode de réalisation, des interrupteurs de l'onduleur et du redresseur sont pilotés de manière à maintenir la tension aux bornes de la première batterie sensiblement égale à la tension aux bornes de la deuxième batterie.

Selon un mode de réalisation, des interrupteurs de l'onduleur et du redresseur sont pilotés de sorte que la différence de tension $\Delta V$ entre la première et la deuxième batterie et la tension Ve aux bornes de la première batterie respecte la relation $0 \leq \Delta V/VE \leq 0,2$.

Selon un mode de réalisation, des interrupteurs du redresseur sont ouverts en avance de phase lorsque la tension délivrée par l'onduleur passe d'une valeur nulle à une valeur non nulle et sont fermés en retard de phase lorsque la tension délivrée par l'onduleur passe d'une valeur non nulle à une valeur nulle.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins:

- la figure 1 représente un schéma de principe du dispositif d'alimentation d'un réseau électrique selon la présente invention ;
- la figure 2 représente un schéma détaillé d'un dispositif d'alimentation d'un réseau électrique selon un mode de réalisation ;
- la figure 3 représente un chronogramme des états des interrupteurs du dispositif d'alimentation de la figure 2 ;
- la figure 4 représente un schéma détaillé d'un dispositif d'alimentation d'un réseau électrique selon un mode de réalisation ;
- les figures 5 et 6 représentent des schémas détaillés de dispositifs d'alimentation d'un réseau électrique selon un mode de réalisation, dans lequel un chargeur électrique est intégré au dispositif.

Sur ces figures, les mêmes numéros de référence désignent des éléments identiques.

La présente invention concerne un dispositif d'alimentation d'un réseau électrique d'un véhicule automobile. Le réseau électrique comprend des consommateurs électriques embarqués dans le véhicule, par exemple un moteur électrique destiné à entraîner le véhicule. Le dispositif est notamment embarqué dans le véhicule et comprend une première batterie, dite batterie d'énergie, et une deuxième batterie, dite batterie de puissance. Notamment, la première batterie a une densité d'énergie massique supérieure à celle de la deuxième batterie pour pouvoir alimenter le réseau électrique du véhicule sur une longue durée en régime stabilisé. La deuxième batterie permet d'alimenter le réseau électrique lorsque ce dernier requiert une forte puissance, par exemple lors des phases d'accélération du véhicule. A cet effet, la deuxième batterie peut avoir une densité de puissance supérieure à celle de la première batterie. Le dispositif comprend également un convertisseur de tension comprenant une première borne reliée à la première batterie et une deuxième borne reliée à la deuxième batterie. L'idée de la présente invention est de configurer le convertisseur de tension continue pour qu'il se comporte comme une source de courant en série de manière à contrôler le courant échangé avec la première batterie et optimiser le rendement du convertisseur de tension continue.

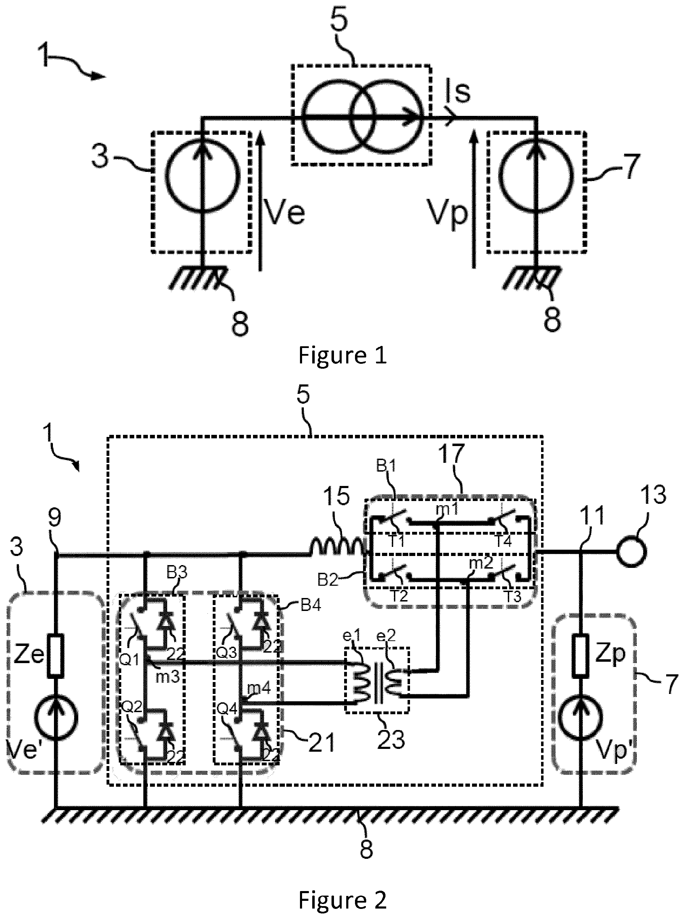

La figure 1 représente un schéma équivalent du dispositif d'alimentation 1 dans lequel la première batterie 3 est représentée comme une première source de tension Ve, le convertisseur de tension continue 5 comme une source de courant Is, et la deuxième batterie 7 comme une source de tension Vp, le convertisseur de tension continue 5 étant disposé en série entre la première 3 et la deuxième 7 batterie. Les batteries 3, 7 sont également reliées à la masse 8. Ainsi, du fait de la mise en série des deux batteries 3, 7 et du convertisseur 5, le convertisseur 5 agit comme un régulateur de puissance des échanges avec la première batterie 3. La puissance vue par le convertisseur 5 est fonction de la différence de tension entre les deux batteries 3, 7, ce qui permet de minimiser la puissance vue par le convertisseur 5 comme cela décrit par la suite.

La figure 2 représente un schéma détaillé d'un exemple de dispositif d'alimentation 1 comprenant la première batterie 3 représentée par une première source de tension parfaite Ve' et une première impédance Ze ; la deuxième batterie 7 représentée par une deuxième source de tension parfaite Vp' et une deuxième impédance Zp ; et le convertisseur 5 comprenant une première borne 9 et une deuxième borne 11 reliées respectivement à la première batterie 3 et à la deuxième batterie 7. La deuxième borne 11 du convertisseur 5 est également reliée au réseau électrique 13 du véhicule. Le convertisseur de tension 5 comprend une inductance 15 et un ensemble d'interrupteurs T1, T2, T3, T4 en série avec la première 3 et la deuxième 7 batteries. Les interrupteurs T1, T2, T3, T4 sont configurés pour réguler le courant dans l'inductance 15. Des successions d'ouverture et de fermeture des interrupteurs T1, T2, T3, T4 permettent d'induire une montée ou une diminution du courant dans l'inductance 15. Ainsi, le courant échangé avec la première batterie 3 peut être régulé à une valeur de référence.

En particulier, l'ensemble d'interrupteur T1, T2, T3, T4 en série avec l'inductance 15 forme un redresseur 17. Le redresseur 17 redresse une tension alternative pour la délivrer à l'inductance 15 et ainsi contrôler le courant circulant dans l'inductance 15. Selon un mode de réalisation, le redresseur 17 comprend deux branches B1 et B2 montées en parallèle, chacune des branches B1, B2 comprenant deux interrupteurs T1, T4 ou T2, T3 montés en série et séparés par un point milieu, les points milieux étant notés respectivement m1 et m2. Cependant, le redresseur 17 peut avoir une autre configuration, par exemple une configuration push-pull. Le redresseur 17 permet de réguler le courant dans l'impédance 15. Le redresseur 17 est alimenté, notamment via ses points milieux m1 et m2, par un onduleur 21. Les interrupteurs T1, T2, T3, T4 peuvent avoir une diode en parallèle. Cela peut être par exemple le cas si le convertisseur 5 est monodirectionnel.

L'onduleur 21 est configuré pour délivrer une tension alternative au redresseur 17 à partir d'une source de tension, dite source d'alimentation de l'onduleur. Dans l'exemple illustré en figure 2, la source d'alimentation de l'onduleur est la première batterie 3. L'onduleur 21 est monté en parallèle avec la première batterie 3, c'est-à-dire entre la première borne 9 du convertisseur 5 et la masse 8. Selon un mode de réalisation, l'onduleur 21 comprend deux branches B3 et B4 montées en parallèle, chacune des branches B3, B4 comprenant deux interrupteurs Q1, Q2 ou Q3, Q4 branchés en série et séparés par un point milieu, les points milieux étant notés respectivement m3 et m4. Cependant, l'onduleur 21 peut avoir une autre configuration, par exemple une configuration push-pull. Des diodes 22 peuvent être montées en parallèle des interrupteurs Q1, Q3, Q2, Q4 de l'onduleur 21. Alternativement, les diodes 22 peuvent être des diodes intrinsèques aux interrupteurs Q1, Q3, Q2, Q4. C'est notamment le cas lorsque les interrupteurs Q1, Q3, Q2, Q4 sont des transistors MOSFET. Ainsi les points milieux m3 et m4 de l'onduleur 21 sont reliés aux points milieux m1 et m2 du redresseur 17 pour alimenter le redresseur 17 et ainsi réguler le courant dans l'inductance 15.

L'onduleur 21 fonctionne avec une forte tension et un faible courant et le redresseur 17 fonctionne avec un fort courant et une faible tension. Afin d'isoler les contraintes électriques entre l'onduleur 21 et le redresseur 17, un transformateur 23 est disposé entre les points milieux m3, m4 de l'onduleur 21 et les points milieux m1, m2 du redresseur 17. Ainsi, les extrémités d'un premier enroulement el du transformateur 23 sont reliées respectivement aux points milieux m3 et m4 de l'onduleur 21 tandis que les extrémités d'un deuxième enroulement e2 du transformateur 23 sont reliées respectivement aux points milieux m1 et m2 du redresseur 17.

Le convertisseur 5 peut être réversible et permet donc un transfert d'énergie de la première borne 9 vers la deuxième borne 11 et de la deuxième borne 11 vers la première borne 9. Ainsi, le convertisseur 5 permet un transfert de la première batterie 3 vers la deuxième batterie 7 et inversement. Alternativement, le convertisseur 5 peut-être monodirectionnel, c'est-à-dire ne permettre un transfert d'énergie que de la première borne 9 vers la deuxième borne 11, ou que de la deuxième borne 11 vers la première borne 9.

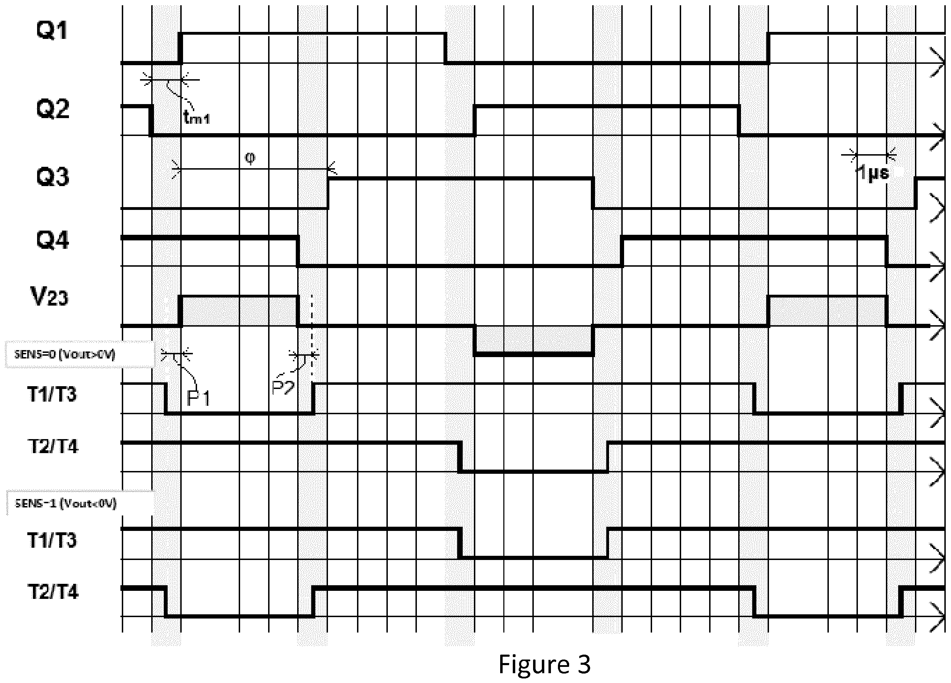

La figure 3 illustre un exemple de fonctionnement du dispositif d'alimentation 1. L'onduleur 21 contrôle le niveau de tension appliqué à l'inductance 15. La tension délivrée par l'onduleur 21 est déterminée par les commandes des interrupteurs Q1, Q3, Q2, Q4. L'onduleur 21 est commandé par un décalage de phase $\varphi$ entre les bras B3, B4 de l'onduleur 21. La tension V23 délivrée par l'onduleur 21 entre les points milieux m3, m4 est déterminée par le décalage de phase $\varphi$ entre les bras B3, B4 de l'onduleur 21. Cependant, l'onduleur 21 pourrait être commandé par tout type de commande permettant de délivrer une tension alternative en sortie de l'onduleur 21. Dans un bras B3, B4 un temps mort $t_{m1}$ peut être prévu entre les interrupteurs Q1, Q2 ou Q4, Q3 du bras pour éviter une conduction simultanée dans les deux interrupteurs du bras.

Le redresseur 17 détermine la polarité de la tension appliquée à l'inductance 15. Les interrupteurs T1, T2, T3, T4 sont fermés en correspondance suivant une diagonale en fonction de la polarité que l'on souhaite appliquer à l'inductance 15. Par exemple par convention, un sens positif peut être pris de la première 3 vers la deuxième 7 batterie et un sens négatif de la deuxième 7 vers la première batterie 3. Chaque bras B1,B2 a un interrupteur T1, T2 connecté à l'inductance 15 et un interrupteur T4,T3 connecté à la deuxième borne 11 du convertisseur 5, ces interrupteurs étant séparés par un point milieu m1, m2. Suivant le sens dans lequel on souhaite appliquer la tension délivrée par l'onduleur 21, soit l'interrupteur T1 du premier bras B1 situé du côté de l'inductance 15 est fermé avec l'inductance T3 du deuxième bras B2 situé du côté de la deuxième borne 11, les autres interrupteurs T2, T4 étant ouverts; soit l'interrupteur T2 du deuxième bras B2 situé du côté de l'inductance 15 est fermé avec l'inductance T4 du premier bras B1 situé du côté de la deuxième borne 11, les autres interrupteurs T1, T3 étant ouverts. Lorsque la tension V23 délivrée par l'onduleur 21 est nulle les interrupteurs T1, T2, T3, T4 du redresseur 17 sont fermés pour mettre en court-circuit l'enroulement secondaire e2 du transformateur 23. Les interrupteurs T1, T2, T3, T4 du redresseur 17 peuvent être ouverts en avance de phase P1 lorsque la tension délivrée par l'onduleur 21 passe d'une valeur nulle à une valeur non nulle et peuvent être fermés en retard de phase P2 lorsque la tension délivrée par l'onduleur 21 passe d'une valeur non nulle à une valeur nulle. Ceci permet de sauvegarder une énergie stockée dans les inductances de fuite du transformateur 23 en la réinjectant dans la source d'alimentation de l'onduleur 21, par l'intermédiaire de l'onduleur 21. En particulier, on peut donc réinjecter cette énergie dans la première batterie 3 lorsque la source d'alimentation de l'onduleur 21 est la première batterie 3.

Lorsqu'une tension positive est appliquée à l'inductance 15, le courant dans l'inductance 15 augmente, lorsqu'une tension négative est appliquée à l'inductance 15, le courant dans l'inductance 15 diminue. Ainsi, en contrôlant la valeur absolue de la pente du courant grâce à l'onduleur 21 et le signe de cette pente grâce au redresseur 17, on peut contrôler le courant circulant dans l'inductance 15 et donc obtenir une source de courant en série entre la première batterie 3 et la deuxième batterie 7.

La source de courant peut par exemple délivrer un courant correspondant à un courant maximum pouvant être échangé avec la première batterie 3. Le courant de sortie de la première batterie 3 est par exemple inférieur à un seuil, notamment 135 A, et le courant d'entrée est inférieur à un seuil, notamment 45 A pour permettre d'optimiser l'endurance de la batterie. Ces seuils dépendent de la technologie des cellules de stockage de la première batterie 3. La deuxième batterie peut recevoir ou émettre un courant est plus élevé que le courant de la première batterie.

En fonctionnement, le convertisseur 5 permet d'échanger de l'énergie avec la première batterie 3 avec un fort courant alors que la puissance du convertisseur 5 reste très faible.

Ceci est en particulier le cas, lorsque la différence de tension entre la première 3 et la deuxième batterie 7 est sensible ou maintenue inférieure ou égale à un seuil.

La puissance du convertisseur 5 est donnée par la relation :

$$P_{source}=i*(Ve-Vp)=P_{b1}*(1-Ve/Vp) \qquad (1)$$

avec $P_{source}$ la puissance de la source de courant formée par le convertisseur 5, i le courant entre la première borne 9 et la deuxième borne 11, Ve la tension entre la première borne 9 et la masse 8 c'est-à-dire aux bornes de la première batterie 3, Vp la tension entre la deuxième borne 11 et la masse 8 c'est-à-dire aux bornes de la deuxième batterie 7 et, $P_{b1}$ la puissance de la première batterie 3. Ainsi, à partir de l'équation (1), on observe qu'en maintenant les tensions Ve et Vp proches l'une de l'autre, la puissance vue par le convertisseur 5 est proche de zéro watt.

Par ailleurs, le rendement du convertisseur 5 peut être défini par :

$$\eta_{conv}=1/(1+(1-\eta_{source})*|1-Ve/Vp|) \qquad (2)$$

avec $\eta_{source}$ le rendement de la source de courant formée par le convertisseur 5 et défini par :

$$\eta_{source}=P_{source}/(P_{source}+P_{pertes}) \qquad (3)$$

avec $P_{pertes}$ la puissance liée aux pertes dans le convertisseur. Ainsi, à partir de l'équation (2), on observe qu'en maintenant les tensions Ve et Vp proches l'une de l'autre, le rendement du convertisseur est proche de 1.

La différence de tension entre la première batterie 3 et la deuxième batterie 7 peut respecter la relation :

$$|Ve-Vp| < m \times Ve - 4 \times Lf \times Imax \times Fclk,$$

où m est le rapport de transformation du transformateur 23 ; Lf est l'inductance de fuite au secondaire du transformateur 23 ; Imax est le courant maximum en sortie du convertisseur 5 vers le réseau électrique 13 du véhicule ou la deuxième batterie 7, autrement dit Imax est le courant maximal qui doit être débité sur l'ensemble formé par le réseau électrique 13 du véhicule et la deuxième batterie 7 ; Fclk est la fréquence de commutation de l'onduleur 21 et du redresseur 17. Ce qui permet de garder une puissance du convertisseur 5 qui est faible, notamment inférieure à la puissance échangée avec le réseau électrique 13 du véhicule ou la deuxième batterie 7. Cette puissance échangée est par exemple égale au produit du courant circulant dans l'inductance 15 avec la tension Vp aux bornes de la deuxième batterie 7. Par exemple, le rapport entre la différence de tension Ve-Vp entre la première batterie 3 et la deuxième batterie 7et la tension Ve de la batterie énergétique est comprise entre 0 et 0,2.

Le pilotage de l'onduleur 21 et du redresseur 17 est donc effectué de manière à réguler le courant entre la première borne 9 et la deuxième borne 11 du convertisseur 5. La valeur du courant de référence peut dépendre d'un ou plusieurs paramètres, tels que la puissance maximale souhaitée pour le convertisseur 5, le courant maximum échangeable avec la première batterie 3, ou la différence de tension (Ve-Vp) maximale entre la première borne 9 et la deuxième borne 11 du convertisseur 5, de manière notamment à maintenir les tensions Ve de la première batterie 3 et Vp de la deuxième batterie sensiblement égales.

L'onduleur 21 et le redresseur 17 se comportent donc comme un contrôleur de puissance qui régule le courant traversant l'inductance 15 pour créer une source de courant en série entre la première batterie 3 et la deuxième batterie 7, l'une des batteries agissant comme une source de tension et l'autre comme une charge.

Ainsi, si la puissance demandée par le réseau électrique du véhicule est faible, par exemple lorsque la vitesse du véhicule est stabilisée, cette puissance est fournie par la première batterie 3 via le convertisseur 5 ; alors que, lorsque la puissance demandée par le réseau électrique du véhicule est forte, par exemple lors des phases d'accélérations, la puissance est fournie en majorité par la deuxième batterie 7, le convertisseur 5 ne pouvant fournir un courant supérieur au courant traversant l'inductance 15 depuis la première batterie 3.

Par ailleurs, si l'utilisateur du véhicule effectue de nombreuses accélérations, la deuxième batterie 7 est alors déchargée. La deuxième batterie 7 peut alors être rechargée à partir de la première batterie 3 via le convertisseur 5. A l'inverse, si l'utilisateur du véhicule a une conduite souple et décharge essentiellement la première batterie 3, cette dernière peut être rechargée par la deuxième batterie 7 via le convertisseur 5.

En cas d'utilisation d'un système annexe de récupération d'énergie comme un panneau solaire ou un dispositif de freinage régénératif -par exemple un moteur électrique connecté au réseau électrique du véhicule-, en fonction de la puissance fournie par le système annexe, cette puissance sera utilisée pour recharger l'une ou l'autre des batteries 3, 7.

Le dispositif d'alimentation 1 de la présente invention permet donc du fait de la structure du convertisseur 5 générant une source de courant en série entre deux batteries 3, 7 de permettre un transfert de puissance entre une batterie énergétique 3 de faible courant et une batterie de puissance 7 de fort courant sans nécessiter de composants coûteux et avec un minimum de pertes. Ceci est en particulier le cas si les tensions d'entrée et de sortie du convertisseur 5 sont maintenues sensiblement égales.

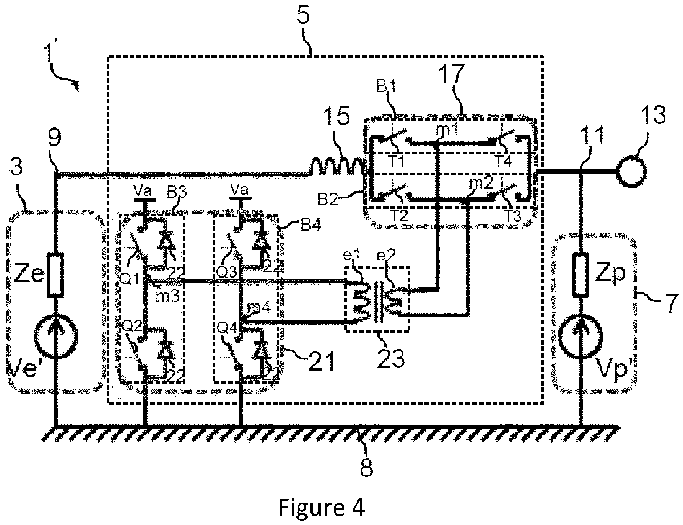

La figure 4 illustre un exemple de dispositif d'alimentation 1' selon un mode de réalisation dans lequel la source d'alimentation de l'onduleur est une troisième source de tension Va différente de la première 3 et de la deuxième 7 batterie. Cette troisième source de tension délivre une tension Va alimentant l'onduleur 21. La masse de la source de tension Va peut être commune à celle de la première 3 et de la deuxième 7 batterie comme illustré en figure 4, ou la masse de la source de tension Va peut être différente. Le dispositif illustré en figure 4 est sinon similaire à l'exemple illustré en figure 2 et fonctionne de façon similaire à ce qui a été décrit précédemment.

Selon un mode de réalisation, le dispositif selon l'invention comprend un chargeur qui permet de charger la source alimentant l'onduleur 21 ou la première batterie 3 à partir d'un réseau électrique extérieur au véhicule.

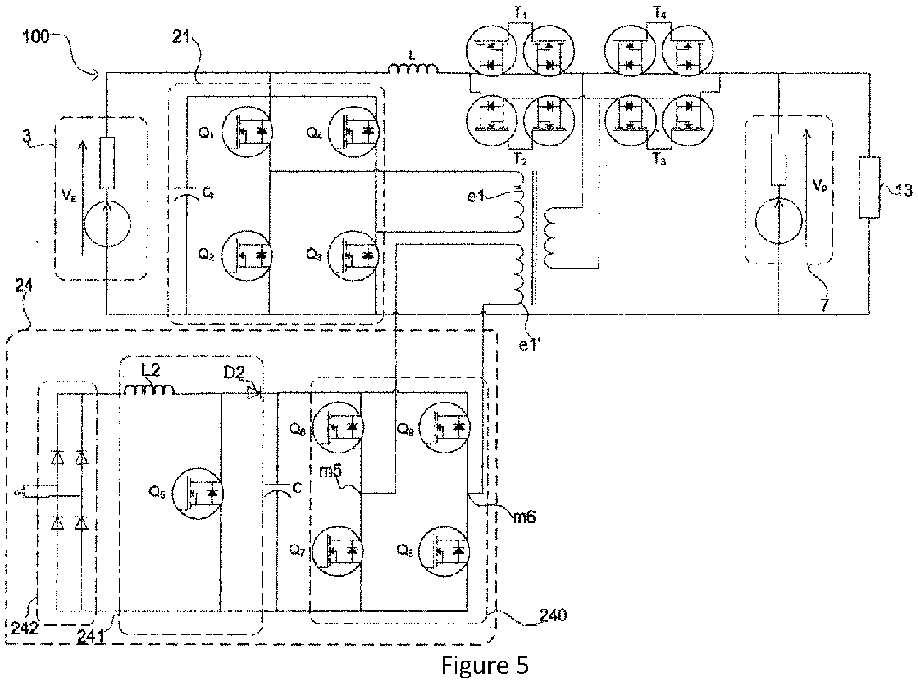

La figure 5 illustre un exemple de dispositif d'alimentation 100 selon ce mode de réalisation. Dans cet exemple, la première batterie 3 est aussi la source d'alimentation de l'onduleur 21. Le dispositif 100 comprend un chargeur 24 qui est une unité différente de l'onduleur 21. Le transformateur 23 comprend un deuxième enroulement primaire el' connecté en sortie du chargeur 24. Lors d'une charge à partir d'un réseau électrique extérieur, le chargeur 24 alimente la première batterie 3 par l'intermédiaire du deuxième enroulement primaire el', du premier enroulement primaire el et de l'onduleur 21. Les interrupteurs T1, T2, T3, T4 du redresseur 17 peuvent être maintenus ouverts. Ainsi, le dispositif d'alimentation 100 comprend un chargeur intégré 24. Une charge de la première batterie 3 à partir d'un réseau électrique extérieur au véhicule ou à partir du réseau électrique du véhicule est donc obtenue avec un seul dispositif, ce qui améliore l'intégration du dispositif d'alimentation. Un condensateur Cf peut être prévu en sortie de l'onduleur 21 pour filtrer un courant de découpage de l'onduleur. Ce condensateur Cf peut également être prévu dans les exemples illustrés en figure 2, 4 et 6. Le dispositif 100 est sinon similaire au dispositif illustré en figure 2. Selon une variante, le chargeur 24 du dispositif d'alimentation 100 comprend une partie onduleur 240 qui a deux branches montées en parallèle. Chaque branche comprend deux interrupteurs Q6, Q7 ou Q8, Q9 branchés en série et séparés par un point milieu, les points milieux étant notés respectivement m5 et m6. Cependant, la partie onduleur 240 peut avoir une autre configuration. Ces interrupteurs Q6, Q7, Q8, Q9 peuvent avoir des caractéristiques similaires à celles décrites en relation ave l'onduleur 21. Les points milieux m5 et m6 de la partie onduleur 240 sont reliés aux points milieux m3 et m4 de l'onduleur 21 pour alimenter la première batterie 3 lors d'une charge par un réseau électrique extérieur. Notamment, les points milieux m3, m4 et m5, m6 sont reliés par les enroulements primaires el, el' du transformateur 23. Le chargeur 24 comprend en outre une partie convertisseur de tension 241 qui élève une tension d'entrée issue du réseau électrique extérieure en une tension délivrée à la partie onduleur 240. La partie convertisseur 240 comprend une diode D2 connectée à l'entrée de la partie onduleur 240 et à un interrupteur Q5, et une inductance L2 ayant une borne connectée entre la diode D2 et l'interrupteur Q5. Un condensateur C fait l'interface entre la partie onduleur 240 et la partie convertisseur 241. En amont de la partie convertisseur 241, une partie redresseur 242 est connectée au réseau électrique extérieur pour redresser un signal électrique alternatif délivré par le réseau électrique extérieur. Le redresseur est par exemple un pont de diode.

Dans l'exemple de la figure 5, chaque interrupteur T1, T2, T3, T4 est mis en œuvre par deux transistors MOSFET en série avec source et grille commune, de façon à réaliser un interrupteur bidirectionnel. Les interrupteurs Q1, Q2, Q3, Q4 de l'onduleur 21 et les interrupteurs Q5, Q6, Q7, Q8, Q9 du chargeur 24 sont mis en œuvre avec des transistors MOSFET. Cependant d'autre types d'interrupteurs auraient pu être utilisés, par exemple des transistors IGBT ou autres. Le convertisseur 5 pourrait être monodirectionnel.

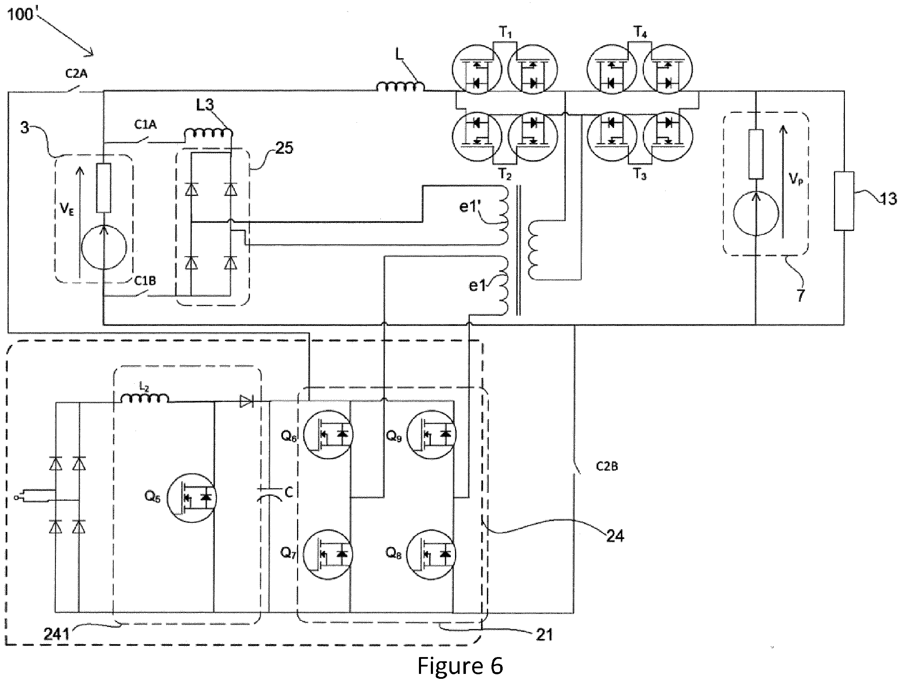

La figure 6 illustre un autre exemple de dispositif d'alimentation 100' selon ce mode de réalisation. Dans cet exemple, la première batterie 3 est aussi la source d'alimentation de l'onduleur 21 et l'onduleur 21 du dispositif 100' est compris dans le chargeur 24. Autrement dit, l'onduleur 21 utilisé pour délivrer une tension alternative au redresseur 17 lors d'un échange d'énergie entre la première batterie 3 et la deuxième batterie 7 ou le réseau électrique 13 du véhicule, correspond à la partie onduleur du chargeur 24. Le transformateur 23 comprend un deuxième enroulement primaire el' connecté à un redresseur 25 en série avec une inductance L3 pour alimenter la source d'alimentation de l'onduleur 21 qui correspond ici à la première batterie 3. Le dispositif 100' comprend des interrupteurs C2A, C2B pour connecter l'entrée de l'onduleur 21 aux bornes de la première batterie 3 lors d'un échange d'énergie entre la première batterie 3 et la deuxième batterie 7 ou le réseau électrique du véhicule ; et des interrupteurs C1A, C1B pour connecter l'ensemble formé par l'inductance L3 et le redresseur 25 aux bornes de la première batterie 3 lors d'une charge de la première batterie 3 par un réseau électrique extérieur.

Lors d'un échange d'énergie entre la première batterie 3 et la deuxième batterie 7 ou le réseau électrique du véhicule, les interrupteurs C2A, C2B sont fermés pour connecter l'entrée de l'onduleur 21 aux bornes de la première batterie 3. Les interrupteurs C1A, C1B sont ouverts pour déconnecter l'ensemble formé par l'inductance L3 et le redresseur 25 des bornes de la première batterie 3. L'entrée du chargeur ne reçoit pas de signal électrique. L'échange d'énergie avec la première batterie 3 s'effectue comme décrit précédemment. Lors d'une charge de la première batterie 3 à partir d'un réseau électrique extérieur, l'entrée du chargeur 24 reçoit un signal électrique. Les interrupteurs C2A, C2B sont ouverts pour déconnecter l'entrée de l'onduleur 21 des bornes de la première batterie 3. Les interrupteurs C1A, C1B sont fermés pour l'ensemble formé par l'inductance L3 et le redresseur 25 aux bornes de la première batterie 3. Les interrupteurs T1, T2, T3, T4 du redresseur 17 peuvent être maintenus ouverts. Le chargeur 24 alimente la première batterie 3 par l'intermédiaire du premier enroulement primaire el, du deuxième enroulement primaire el', du redresseur 25 et de l'inductance L3. Le dispositif d'alimentation 100' comprend donc un chargeur intégré 24. Une charge de la première batterie 3 à partir d'un réseau électrique extérieur au véhicule ou à partir du réseau électrique du véhicule est donc obtenue avec un seul dispositif 100', ce qui améliore l'intégration du dispositif d'alimentation 100'.

Dans l'exemple de la figure 6, chaque interrupteur T1, T2, T3, T4 est mis en œuvre par deux transistors MOSFET en série avec source et grille commune, de façon à réaliser un interrupteur bidirectionnel. Les interrupteurs Q1, Q2, Q3, Q4 Q5 du chargeur 24 sont mis en œuvre avec des transistors MOSFET. Cependant d'autre types d'interrupteurs auraient pu être utilisés, par exemple des transistors IGBT ou autres. Le convertisseur 5 pourrait être mono directionnel.

Les modes de réalisation peuvent être combinés entre eux.

Notamment, l'exemple illustré en figure 5 pourrait comprendre une source d'alimentation de l'onduleur 21 qui est différente de la première batterie 3 comme illustré en figure 4. Dans ce cas, le chargeur 24 peut charger la source d'alimentation de l'onduleur 21 à partir d'un réseau électrique extérieur comme expliqué précédemment en relation avec la figure 5 en remplaçant la première batterie 3 par la source d'alimentation Va de l'onduleur 21. Alternativement, le chargeur 24 peut charger la première batterie 3 grâce à des interrupteurs et une inductance supplémentaires qui sont similaires aux interrupteurs C1A, C1B, C2A, C2B et à l'inductance L3 illustrés en figure 6. L'onduleur 21 est alors commandé comme un redresseur, pour correspondre au redresseur 25 illustré en figure 6.

Notamment, l'exemple illustré en figure 6 pourrait comprendre une source d'alimentation de l'onduleur 21 qui est différente de la première batterie 3. Dans ce cas, le chargeur 24 peut charger la source d'alimentation de l'onduleur 21 à partir d'un réseau électrique extérieur comme expliqué précédemment en relation avec la figure 5 en remplaçant la première batterie 3 par la source d'alimentation Va de l'onduleur 21. Alternativement, le chargeur 24 peut charger la première batterie 3 en connectant l'ensemble formé par l'inductance L3 et le redresseur 25 aux bornes de la première batterie d'alimentation 3 grâce aux interrupteurs C1A, C1B.

## Revendications

1. Dispositif d'alimentation (1, 1', 100, 100') d'un réseau électrique (13) d'un véhicule automobile comprenant une première (3) et une deuxième (7) batterie et un convertisseur de tension continue (5) comprenant une première borne (9) reliée à la première batterie (3) et une deuxième borne (11) reliée à la deuxième batterie (7), la deuxième borne (11) étant également destinée à être connectée au réseau électrique (13), dans lequel le convertisseur de tension continue (5) est configuré pour réaliser une source de courant disposée en série entre la première (3) et la deuxième (7) batterie de façon à contrôler le courant échangé avec la première batterie (3) ; et
dans lequel le convertisseur de tension continue (5) comprend :

   - une inductance (15) disposée en série avec la première (3) et la deuxième (7) batterie ;
   - un redresseur (17), disposé en série avec l'inductance (15), configuré pour redresser une tension alternative de façon à délivrer une tension contrôlant le courant parcourant l'inductance (15) ;
   - un onduleur (21) configuré pour délivrer une tension alternative audit redresseur (17) à partir d'une source de tension, dite source d'alimentation de l'onduleur ;
   - un transformateur (23) comprenant un premier enroulement primaire (e1) dont les extrémités sont reliées à la sortie de l'onduleur (21) et un enroulement secondaire (e2) dont les extrémités sont reliées à l'entrée du redresseur (17).

2. Dispositif (1, 1', 100, 100') selon la revendication 1, dans lequel la première batterie (3) a une densité d'énergie massique supérieure à celle de la deuxième batterie (7) et/ou la deuxième batterie (7) a une densité de puissance supérieure à celle de la première batterie (3).

3. Dispositif (1, 1', 100, 100') selon la revendication 1 ou 2 dans lequel le redresseur (17) comprend des interrupteurs (T1, T2, T3, T4) configurés pour réguler le courant dans la première inductance (15).

4. Dispositif (1, 100, 100') selon l'une des revendications précédentes, dans lequel l'onduleur (21) est alimenté par la première batterie (3).

5. Dispositif (1') selon l'une des revendications 1 à 3, dans lequel l'onduleur (21) est alimenté par une source de tension (Va) différente des première (3) et deuxième (7) batteries.

6. Dispositif (100, 100') selon l'une des revendications précédentes, comprenant un chargeur électrique (24) configuré pour charger la source d'alimentation de l'onduleur (21) ou la première batterie (3) à partir d'un réseau électrique extérieur au véhicule.

7. Dispositif (100') selon la revendication précédente, dans lequel l'onduleur (21) est compris dans le chargeur (24), et le transformateur (23) comprend en outre un deuxième enroulement primaire (e1') connecté à un redresseur (25), au moins un interrupteur (C1A, C1B) étant configuré pour connecter ledit redresseur (25) aux bornes de la source d'alimentation de l'onduleur (21) ou à la première batterie (3) pour charger ladite source d'alimentation de l'onduleur (21) ou la première batterie (3) à partir dudit chargeur (24).

8. Dispositif (100') selon la revendication précédente comprenant au moins un interrupteur (C2A, C2B) configuré pour connecter l'onduleur (21) avec la source d'alimentation de l'onduleur (21) lors d'un échange d'énergie entre la première batterie (3) et le réseau électrique du véhicule ou la deuxième batterie (7), et déconnecter l'onduleur (21) d'avec la source d'alimentation de l'onduleur (21) lors d'une charge de ladite source d'alimentation ou de la première batterie (3) par le chargeur (24).

9. Dispositif (100) selon la revendication 6, dans lequel l'onduleur (21) et le chargeur (24) sont deux unités différentes, et dans lequel le transformateur (23) comprend un deuxième enroulement primaire (e1') connecté audit chargeur (24) pour alimenter la source d'alimentation de l'onduleur (21) ou la première batterie (3) lors de la charge de ladite source d'alimentation ou de la première batterie (3) à partir dudit chargeur (24).

10. Dispositif selon l'une des revendications précédentes, dans lequel une première borne (9) de l'inductance (15) est connectée à la borne positive de la première batterie (3), ou respectivement de la deuxième batterie(7), une deuxième borne de l'inductance (15) est connectée à une première borne du redresseur (17), et une deuxième borne (11) du redresseur (17) est connectée à la borne positive de la deuxième batterie (7), ou respectivement la première batterie (3).

11. Dispositif selon l'une des revendications précédentes, dans lequel la source d'alimentation de l'onduleur (21) délivre son alimentation directement aux bornes de l'onduleur (23).

12. Dispositif selon l'une des revendications précédentes, dans lequel la première (3) et la deuxième (7) batteries sont reliées à une même masse (8).

13. Véhicule automobile comprenant un réseau électrique embarqué (13) et un dispositif d'alimentation (1, 1', 100, 100') du réseau électrique selon l'une des revendications 1 à 12.

14. Procédé de pilotage d'un dispositif d'alimentation (1, 1', 100, 100') selon l'une des revendications 1 à 12, dans lequel la différence de tension entre les première (3) et deuxième (7) batteries est maintenue inférieure ou égale à un seuil.

15. Procédé selon la revendication 14, dans lequel des interrupteurs de l'onduleur (21) et du redresseur (17) sont pilotés de manière à maintenir la tension (Ve) aux bornes de la première batterie (3) sensiblement égale à la tension (Vp) aux bornes de la deuxième batterie (7).

16. Procédé selon la revendication 14, dans lequel des interrupteurs de l'onduleur (21) et du redresseur (17) sont pilotés de sorte que la différence de tension $\Delta V$ entre la première (3) et la deuxième batterie (7) et la tension Ve aux bornes de la première batterie (3) respecte la relation $0 \le \Delta V/VE \le 0,2$.

17. Procédé selon l'une des revendications 14 à 16, dans lequel des interrupteurs (T1, T2, T3, T4) du redresseur (17) sont ouverts en avance de phase (P1) lorsque la tension délivrée par l'onduleur (21) passe d'une valeur nulle à une valeur non nulle et sont fermés en retard de phase (P2) lorsque la tension délivrée par l'onduleur (21) passe d'une valeur non nulle à une valeur nulle.

**Patentansprüche**

1. Stromversorgungsvorrichtung (1, l', 100, 100') eines Stromnetzes (13) eines Kraftfahrzeugs, umfassend eine erste (3) und eine zweite (7) Batterie und einen Gleichspannungswandler (5), der eine erste an die erste Batterie (3) angeschlossene Klemme (9) und eine zweite an die zweite Batterie (7) angeschlossene Klemme (11) umfasst, wobei die zweite Klemme (11) auch dazu bestimmt ist, mit dem Stromnetz (13) verbunden zu werden, wobei der Gleichspannungswandler (5) dazu ausgestaltet ist, eine Stromquelle zu realisieren, die in Reihe zwischen der ersten (3) und der zweiten (7) Batterie angeordnet ist, so dass der mit der ersten Batterie ausgetauschte Strom (3) kontrolliert wird, und wobei der Gleichspannungswandler (5) umfasst:

- eine Induktivität (15), die in Reihe mit der ersten (3) und der zweiten (7) Batterie angeordnet ist;
- einen Gleichrichter (17), der in Reihe mit der Induktivität (15) angeordnet ist und dazu ausgestaltet ist, eine Wechselspannung gleichzurichten, so dass eine Spannung abgegeben wird, die den durch die Induktivität (15) fließenden Strom kontrolliert;
- einen Wechselrichter (21), der dazu ausgestaltet ist, eine Wechselspannung an den Gleichrichter (17) ausgehend von einer Spannungsquelle, Stromversorgungsquelle des Wechselrichters genannt, abzugeben;
- einen Transformator (23), der eine erste Primärwicklung (e1), deren Enden an den Ausgang des Wechselrichters (21) angeschlossen sind, und eine Sekundärwicklung (e2), deren Enden an den Eingang des Gleichrichters (17) angeschlossen sind, umfasst.

2. Vorrichtung (1, 1', 100, 100') nach Anspruch 1, bei der die erste Batterie (3) eine Massenenergiedichte hat, die größer als die der zweiten Batterie (7) ist, und/oder die zweite Batterie (7) eine Leistungsdichte hat, die größer als die der ersten Batterie (3) ist.

3. Vorrichtung (1, 1', 100, 100') nach Anspruch 1 oder 2, bei welcher der Gleichrichter (17) Schalter (T1, T2, T3, T4) umfasst, die dazu ausgestaltet sind, den Strom in der ersten Induktivität (15) zu regulieren.

4. Vorrichtung (1, 100, 100') nach einem der vorhergehenden Ansprüche, bei welcher der Wechselrichter (21) von der ersten Batterie (3) versorgt wird.

5. Vorrichtung (1') nach einem der Ansprüche 1 bis 3, bei welcher der Wechselrichter (21) von einer Spannungsquelle (Va) versorgt wird, die verschieden von der ersten (3) und der zweiten (7) Batterie ist.

6. Vorrichtung (100, 100') nach einem der vorhergehenden Ansprüche, umfassend ein elektrisches Ladegerät (24), das dazu ausgestaltet ist, die Stromversorgungsquelle des Wechselrichters (21) oder die erste Batterie (3) aus einem fahrzeugexternen Stromnetz zu laden.

7. Vorrichtung (100') nach dem vorhergehenden Anspruch, bei welcher der Wechselrichter (21) in dem Ladegerät (24) enthalten ist und der Transformator (23) ferner eine zweite Primärwicklung (e1') umfasst, die mit einem Gleichrichter (25) verbunden ist, wobei mindestens ein Schalter (C1A, C1B) dazu ausgestaltet ist, den Gleichrichter (25) mit den Klemmen der Stromversorgungsquelle des Wechselrichters (21) oder mit der ersten Batterie (3) zu verbinden, um die Stromversorgungsquelle des Wechselrichters (21) oder die erste Batterie (3) ausgehend von dem Ladegerät (24) zu laden.

8. Vorrichtung (100') nach dem vorhergehenden Anspruch, umfassend mindestens einen Schalter (C2A, C2B), der dazu ausgestaltet ist, den Wechselrichter (21) bei einem Energieaustausch zwischen der ersten Batterie (3) und dem Stromnetz des Fahrzeugs oder der zweiten Batterie (7) mit der Stromversorgungsquelle des Wechselrichters (21) zu verbinden und den Wechselrichter (21) bei einem Laden der Stromversorgungsquelle oder der ersten Batterie (3) durch das Ladegerät (24) von der Stromversorgungsquelle des Wechselrichters (21) zu trennen.

9. Vorrichtung (100) nach Anspruch 6, bei welcher der Wechselrichter (21) und das Ladegerät (24) zwei verschiedene Einheiten sind und bei welcher der Transformator (23) eine zweite Primärwicklung (e1') umfasst, die mit dem Ladegerät (24) verbunden ist, um die Stromversorgungsquelle des Wechselrichters (21) oder die erste Batterie (3) beim Laden der Stromversorgungsquelle oder der ersten Batterie (3) ausgehend vom Ladegerät (24) zu versorgen.

10. Vorrichtung nach einem der vorhergehenden Ansprüche, bei welcher eine erste Klemme (9) der Induktivität (15) mit der Plusklemme der ersten Batterie (3) beziehungsweise der zweiten Batterie (7) verbunden ist, eine zweite Klemme der Induktivität (15) mit einer ersten Klemme des Gleichrichters (17) verbunden ist und eine zweite Klemme (11) des Gleichrichters (17) mit der Plusklemme der zweiten Batterie (7) beziehungsweise der ersten Batterie (3) verbunden ist.

11. Vorrichtung nach einem der vorhergehenden Ansprüche, bei der die Stromversorgungsquelle des Wechselrichters (21) ihre Stromversorgung direkt an den Klemmen des Wechselrichters (23) abgibt.

12. Vorrichtung nach einem der vorhergehenden Ansprüche, bei der die erste (3) und die zweite (7) Batterie an dieselbe Masse (8) angeschlossen sind.

13. Kraftfahrzeug, das ein Bordstromnetz (13) und eine Stromversorgungsvorrichtung (1, 1', 100, 100') des Stromnetzes nach einem der Ansprüche 1 bis 12 umfasst.

14. Verfahren zur Steuerung einer Stromversorgungsvorrichtung (1, 1', 100, 100') nach einem der Ansprüche 1 bis 12, bei dem die Spannungsdifferenz zwischen der ersten (3) und der zweiten (7) Batterie kleiner als ein oder gleich einem Schwellenwert gehalten wird.

15. Verfahren nach Anspruch 14, bei dem Schalter des Wechselrichters (21) und des Gleichrichters (17) so gesteuert werden, dass die Spannung (Ve) an den Klemmen der ersten Batterie (3) im Wesentlichen gleich der Spannung (Vp) an den Klemmen der zweiten Batterie (7) gehalten wird.

16. Verfahren nach Anspruch 14, bei dem Schalter des Wechselrichters (21) und des Gleichrichters (17) derart gesteuert werden, dass die Spannungsdifferenz $\Delta V$ zwischen der ersten (3) und der zweiten Batterie (7) und der Spannung Ve an den Klemmen der ersten Batterie (3) die Gleichung $0 \leq \Delta V/VE \leq 0,2$ erfüllt.

17. Verfahren nach einem der Ansprüche 14 bis 16, bei dem Schalter (T1, T2, T3, T4) des Gleichrichters (17) phasenvoreilend (P1) geöffnet werden, wenn die vom Wechselrichter (21) abgegebene Spannung von einem Wert null zu einem Wert ungleich null wechselt, und phasennacheilend (P2) geschlossen werden, wenn die vom Wechselrichter (21) abgegebene Spannung von einem Wert ungleich null zu einem Wert null wechselt.

**Claims**

1. Device (1, 1', 100, 100') for supplying power to an electrical system (13) of a motor vehicle comprising a first (3) and a second (7) battery and a DC voltage converter (5) comprising a first terminal (9) linked to the first battery (3) and a second terminal (11) linked to the second battery (7), the second terminal (11) also being intended to be connected to the electrical system (13), wherein the DC voltage converter (5) is configured to create a current source arranged in series between the first (3) and the second (7) battery so as to control the current exchanged with the first battery (3); and wherein the DC voltage converter (5) comprises:

   - an inductor (15) arranged in series with the first (3) and the second (7) battery;
   - a rectifier (17), arranged in series with the inductor (15), configured to rectify an AC voltage so as to deliver a voltage controlling the current flowing through the inductor (15);
   - an inverter (21) configured to deliver an AC voltage to said rectifier (17) from a voltage source, termed power supply source of the inverter;
   - a transformer (23) comprising a first primary winding (e1), the ends of which are linked to the output of the inverter (21), and a secondary winding (e2), the ends of which are linked to the input of the rectifier (17).

2. Device (1, 1', 100, 100') according to Claim 1, wherein the first battery (3) has a specific energy density greater than that of the second battery (7), and/or the second battery (7) has a power density greater than that of the first battery (3).

3. Device (1, 1', 100, 100') according to Claim 1 or 2, wherein the rectifier (17) comprises switches (T1, T2, T3, T4) configured to regulate the current in the first inductor (15).

4. Device (1, 100, 100') according to one of the preceding claims, wherein the inverter (21) is powered by the first battery (3).

5. Device (1') according to one of Claims 1 to 3, wherein the inverter (21) is powered by a voltage source (Va) different from the first (3) and second (7) batteries.

6. Device (100, 100') according to one of the preceding claims, comprising an electric charger (24) configured to charge the power supply source of the inverter (21) or the first battery (3) from an electrical system external to the vehicle.

7. Device (100') according to the preceding claim, wherein the inverter (21) is contained within the charger (24), and the transformer (23) furthermore comprises a second primary winding (e1') connected to a rectifier (25), at least one switch (C1A, C1B) being configured to connect said rectifier (25) to the terminals of the power supply source of the inverter (21) or to the first battery (3) in order to charge said power supply source of the inverter (21) or the first battery (3) from said charger (24) .

8. Device (100') according to the preceding claim, comprising at least one switch (C2A, C2B) configured to connect the inverter (21) to the power supply source of the inverter (21) when energy is exchanged between the first battery (3) and the electrical system of the vehicle or the second battery (7), and to disconnect the inverter (21) from the power supply source of the inverter (21) when said power supply source or the first battery (3) is charged by the charger (24).

9. Device (100) according to Claim 6, wherein the inverter (21) and the charger (24) are two different units, and wherein the transformer (23) comprises a second primary winding (e1') connected to said charger (24) in order to power the power supply source of the inverter (21) or the first battery (3) when said power supply source or the first battery (3) is charged from said charger (24).

10. Device according to one of the preceding claims, wherein a first terminal (9) of the inductor (15) is connected to the positive terminal of the first battery (3), or, respectively, of the second battery (7), a second terminal of the inductor (15) is connected to a first terminal of the rectifier (17), and a second terminal (11) of the rectifier (17) is connected to the positive terminal of the second battery (7), or, respectively, the first battery (3).

11. Device according to one of the preceding claims, wherein the power supply source of the inverter (21) delivers its power supply directly to the terminals of the inverter (23).

12. Device according to one of the preceding claims, wherein the first (3) and second (7) batteries are linked to one and the same ground (8).

13. Motor vehicle comprising an onboard electrical system (13) and a device (1, 1', 100, 100') for supplying power to the electrical system according to one of Claims 1 to 12.

14. Method for controlling a power supply device (1, 1', 100, 100') according to one of Claims 1 to 12, wherein the voltage difference between the first (3) and second (7) batteries is kept lower than or equal to a threshold.

15. Method according to Claim 14, wherein switches of the inverter (21) and of the rectifier (17) are controlled so as to keep the voltage (Ve) across the terminals of the first battery (3) substantially equal to the voltage (Vp) across the terminals of the second battery (7).

16. Method according to Claim 14, wherein switches of the inverter (21) and of the rectifier (17) are controlled such that the voltage difference $\Delta V$ between the first (3) and the second (7) battery and the voltage Ve across the terminals of the first battery (3) complies with the relationship $0 \leq \Delta V/VE \leq 0.2$.

17. Method according to one of Claims 14 to 16, wherein switches (T1, T2, T3, T4) of the rectifier (17) are opened with a phase lead (P1) when the voltage delivered by the inverter (21) changes from a zero value to a non-zero value, and are closed with a phase lag (P2) when the voltage delivered by the inverter (21) changes from a non-zero value to a zero value.

EP 3 227 137 B1

Figure 1

Figure 2

13

Figure 3

Figure 4

Figure 5

Figure 6

EP 3 227 137 B1

# EP 3 227 137 B1

## RÉFÉRENCES CITÉES DANS LA DESCRIPTION

**Documents brevets cités dans la description**

- US 2008316774 A
- WO 2014125737 A
- US 2004174072 A